# EUROPÄISCHE PATENTSCHRIFT

(11) **EP 1 759 079 B1**
(45) Veröffentlichungstag und Bekanntmachung des Hinweises auf die Patenterteilung: **09.12.2015**
(21) Anmeldenummer: 05850411.9
(22) Anmeldetag: 08.06.2005
(51) Int. Cl.: E05C 5/00, E05B 77/06, B60N 2/433

(54) **FAHRZEUGKOMPONENTE UND VERFAHREN ZUR SICHERUNG EINES SCHWENKBAREN BAUTEILS GEGEN ÖFFNEN IM CRASHFALL**
VEHICLE COMPONENT AND METHOD FOR SECURING A PIVOTABLE COMPONENT AGAINST OPENING IN THE EVENT OF A CRASH
ELEMENT DE VEHICULE ET PROCEDE POUR EMPECHER, EN CAS DE COLLISION, L'OUVERTURE D'UN COMPOSANT PIVOTANT

(30) Priorität: 16.06.2004 DE 102004028846
(43) Veröffentlichungstag der Anmeldung: 07.03.2007
(73) Patentinhaber: Johnson Controls GmbH, 51399 Burscheid (DE)
(72) Erfinder: THIES, Marcus, 58285 Gevelsberg (DE); IRGANG, Andreas, Leichlingen 42799 (DE); LETTENMAYER, Lars, 53819 Neunkirchen-Seelscheid (DE); JANZEN, Michael, 51061 Köln (DE)
(74) Vertreter: Wolff, Felix
(86) Internationale Anmeldenummer: PCT/EP2005/052636
(87) Internationale Veröffentlichungsnummer: WO 2006/063871

(56) Entgegenhaltungen:
- EP-A- 0 774 376
- DE-A1- 2 941 235
- DE-A1- 3 825 781
- DE-A1- 4 106 973
- DE-A1- 19 756 344
- DE-C1- 4 312 732
- FR-A- 2 828 149
- US-A- 4 639 040

## Beschreibung

Die vorliegende Erfindung betrifft eine Fahrzeugkomponente, vorzugsweise die Rückenlehne eines Sitzes, die ein schwenkbares Bauteil, vorzugsweise eine Durchladeklappe, mit einer Verriegelung umfasst, wobei die Verriegelung einen Rasthaken aufweist, der im Betriebsfall um eine erste Drehachse von einer Verriegelungsposition in eine Entriegelungsposition drehbar ist, wobei das entriegelte schwenkbare Bauteil um eine zweite Drehachse in einer Öffnenrichtung von einer Im wesentlichen vertikalen Ruheposition in eine im wesentlichen horizontale Durchladeposition klappbar ist. Des weiteren betrifft die vorliegende Erfindung ein Verfahren zur Sicherung eines schwenkbaren Bauteils.

Zur Vergrößerung des Ladevolumens sind In Fahrzeugen häufig der Fahrgastraum und der Laderaum durch klappbare Wände, Sitze oder durch Durchladeklappen getrennt, so dass der Fahrgastraum zumindest teilweise als Laderaum nutzbar Ist. Dies ist beispielsweise in der DE 41 06 973 A offenbart. Insbesondere Durchladeklappen haben den Vorteil, dass lange Gegenstände wie Skier in einen PKW geladen werden können, ohne dass ein Sitz umgeklappt werden muss. Um zu gewährleisten, dass zumindest bei zugeklappten Wänden, Sitzen oder Durchladeldappen bei einem Unfall kein Gepäck in den Fahrgastraum dringt oder die Durchladeklappe aufspringt, muss sichergestellt werden, dass durch die bei einem Unfall auf die Wände, Sitze oder die Durchladeklappe wirkenden Kräfte diese nicht aufklappen.

Aufgabe der vorliegenden Erfindung ist eine kostengünstige, einfach herstellbare und einfach montierbare Fahrzeugkomponente zur Verfügung zu stellen, die ein schwenkbares Bauteil mit einer Verriegelung aufweist, die bei einem Unfall nicht aufklappt.

Die Aufgabe wird gelöst mit einer Fahrzeugkomponente gemäß Patentanspruch 1.

Die erfindungsgemäße Verschiebung der Drehachse relativ zum schwenkbaren Bauteil und/oder des Rasthakens relativ zur Drehachse stellt sicher, dass das schwenkbare Bauteil nicht entriegelbar ist und daher kein Gepäck durch das schwenkbare Bauteil in den Fahrgastraum dringen kann, wenn sich das schwenkbare Bauteil vor dem Crash in der verriegelten Ruheposition befand. Eine Ausführungsform, In der der Rasthaken im Crashfall reversibel so mit dem schwenkbaren Bauteil zusammenwirkt, dass dieses nicht entriegelbar ist, lässt eine Weiterverwendung der Fahrzeugkomponente ohne Reparaturaufwand zu, wenn diese nicht bei dem Crash beschädigt wurde.

Erfindungsgemäß ist die erste Drehachse relativ zu dem schwenkbaren Bauteil, und/oder der Rasthaken relativ zur ersten Drehachse, von einer Betriebsposition in eine Crashposition verschlebbar. Vorzugsweise weist das schwenkbare Bauteil und/oder der Rasthaken deshalb eine Ausnehmung, bevorzugt eine Kulisse, besonders bevorzugt ein Langloch, auf, mittels der die erste Drehachse relativ zu dem schwenkbaren Bauteil und/oder der Rasthaken relativ zur ersten Drehachse kontrolliert verschlebbar ist. Die Ausnehmung führt die Drehachse und/oder den Rasthaken im Crashfall in die bevorzugte Crashposition, so dass das schwenkbare Bauteil nicht mehr entriegelbar ist.

In einer bevorzugten Ausführungsform umfasst die Verriegelung ein Schließstück, welches ortsfest mit der Fahrzeugkomponente verbunden ist, wobei der Rasthaken im Betriebsfall und In Ruheposition des schwenkbaren Bauteils mit dem Schließstück zusammenwirkt und ein Klappen des schwenkbaren Bauteils verhindert und wobei das schwenkbare Bauteil durch Drehung des Rasthakens um die erste Drehachse und um das Schließstück herum entriegelbar ist. Das Zusammenwirken des Schließstücks mit dem Rasthaken verriegelt das schwenkbare Bauteil im Betriebsfall in einer einfachen und sicheren Weise.

Vorzugsweise wirkt im Crashfall und in verriegelter Ruheposition des schwenkbaren Bauteils der Rasthaken kraftschlüssig zwischen dem Schließstück und dem schwenkbaren Bauteil und überträgt die bei einem Unfall in Öffnenrichtung des schwenkbaren Bauteils wirkende Kraft auf das Schließstück. Aufgrund der kraftschlüssigen Verbindung des Rasthakens zum Schließstück und dem schwenkbaren Bauteil und der Anordnung zwischen dem Schließstück und dem schwenkbaren Bauteil werden die bei einem Unfall auftretenden Kräfte in die Struktur der Fahrzeugkomponente eingeleitet und wirken somit zumindest nicht vollständig auf die Fahrzeuginsassen ein.

In einer bevorzugten Ausführungsform weist der Rasthaken ein Rastmittel, bevorzugt eine Nase, auf, das mit dem schwenkbaren Bauteil zusammenwirkt und im Crashfall und in verriegelter Ruheposition des schwenkbaren Bauteils das Entriegeln des Rasthakens verhindert. Ein Rastmittel im Sinne der Erfindung ist jedes Mittel, dass die Position eines Bauteils sichert und eine Veränderung der Position verhindert. Das Rastmittel sichert die Entriegelung des schwenkbaren Bauteils, indem es im Crashfall die Änderung der Position des Rasthakens verhindert. Das Rastmittel kann sich bei einem Unfall plastisch und/oder elastisch verformen und gegebenenfalls auch so rastend wirken.

In einer bevorzugten Ausführungsform weist die Verriegelung einen Entriegelungshebel auf, der um die erste Drehachse drehbar ist und durch dessen Drehung der Rasthaken im Betriebsfall von der Verriegelungsposition in die Entriegelungsposition drehbar ist. Mit dem Entriegelungshebel ist eine einfache Bedienung des schwenkbaren Bauteils möglich.

In einer bevorzugten Ausführungsform umfasst die Verriegelung ein Mittel, bevorzugt eine Feder, das die erste Drehachse und/oder den Rasthaken in der Betriebsposition hält und vorzugsweise nach dem Crash wieder in die Betriebsposition überführt. Das Mittel erhöht die Betriebssicherheit der Verriegelung und ermöglicht durch die bevorzugte Überführung des Rasthakens aus der Crashposition in die Betriebsposition nach einem Unfall bevorzugt aufgrund der Rückstellkraft der Feder, dass die erste Drehachse und/oder der Rasthaken wieder In die Betriebsposition überführt wird, so dass die Weiterverwendung der Fahrzeugkomponente ohne Reparaturaufwand möglich ist, wenn die Fahrzeugkomponente bei dem Crash nicht beschädigt wurde. Das Mittel kann zusätzlich dazu dienen den Entriegelungshebel Immer in seine Verriegelungsposition zurückzustellen. Bevorzugt verschiebt sich im Crashfall die erste Drehachse relativ zu dem schwenkbaren Bauteil und/oder der Rasthaken relativ zur ersten Drehachse gegen die Kraft des Mittels. Dadurch ist sichergestellt, dass das Entriegeln des schwenkbaren Bauteils nicht bereits durch Im Betriebsfall auftretende Kräfte verhindert wird, sondern dass dafür eine Mindestkraft erforderlich ist, die im Betriebsfall bevorzugt nicht auftritt. Das Mittel kann auch ein Mittel sein, das beim Crash plastisch verformt wird.

Vorzugsweise sind zumindest der Entriegelungshebel und der Rasthaken der Verriegelung einstückig hergestellt. Dadurch ist die Bauteilezahl gering und die Verriegelung kostengünstig und einfach herstell- und montierbar. Bevorzugt sind das schwenkbare Bauteil und/oder die Verriegelung aus Kunststoff hergestellt, was kostengünstig ist und wodurch die Fahrzeugkomponente ein geringes Gewicht aufweist.

Die erfindungsgemäße Fahrzeugkomponente steilt sicher, dass bei einem Crash kein Gepäck durch ein schwenkbares Bauteil der Fahrzeugkomponente vom Laderaum in den Fahrgastraum dringen kann, wenn sich das schwenkbare Bauteil vor dem Crash im verriegelten Ruhezustand befand. Die Verriegelung des schwenkbaren Bauteils ist einfach und kostengünstig herstell- und montierbar und die Fahrzeugkomponente weist ein geringes Gewicht auf. Bevorzugt kann das schwenkbare Bauteil nach einem Crash ohne Reparaturaufwand wiederverwendet werden, wenn die Fahrzeugkomponente bei dem Crash nicht beschädigt wurde. Das schwenkbare Bauteil ist für einen Fahrgast einfach bedienbar.

Ein weiterer Gegenstand der vorliegenden Erfindung ist ein Verfahren zur Sicherung , eines schwenkbaren Bauteils gegen Öffnen Im Crashfall gemäß Patentanspruch 11.

Das Verfahren ist einfach durchführbar.

Im folgenden wird die Erfindung durch Figuren 1 - 6b erläutert. Die Erläuterungen sind lediglich beispielhaft und schränken den allgemeinen Erfindungsgedanken nicht ein. Die Erläuterungen geiten gleichermaßen für die erfindungsgemäße Fahrzeugkomponente und das erfindungsgemäße Verfahren.
- **Figur 1**: zeigt einen vertikalen Querschnitt durch eine erfindungsgemäße Fahrzeugkomponente, hier durch eine Rückenlehne eines Sitzes.
- **Figur 2**: zeigt die Verriegelung des schwenkbaren Bauteils, hier einer Durchladeklappe, der Fahrzeugkomponente aus **Figur 1** in einem vertikalen Querschnitt.
- **Figur 3**: zeigt die Verriegelung aus **Figur 2** In Verriegelungsposition Im Betriebsfall.
- **Figur 4**: zeigt die Verriegelung aus **Figur 2** in Entriegelungsposition im Betriebsfall.
- **Figur 5**: zeigt die Verriegelung aus **Figur 2** in Verriegelungsposition im Crashfall.
- **Figur 6a**: zeigt das schwenkbare Bauteil 2 mit der Verriegelung 8 aus **Figur 2** in einem horizontalen Querschnitt in Verriegelungsposition im Betriebsfall.
- **Figur 6b**: zeigt das schwenkbare Bauteil 2 mit der Verriegelung 8 aus **Figur 2** in einem horizontalen Querschnitt in Verriegelungsposition im Crashfall.

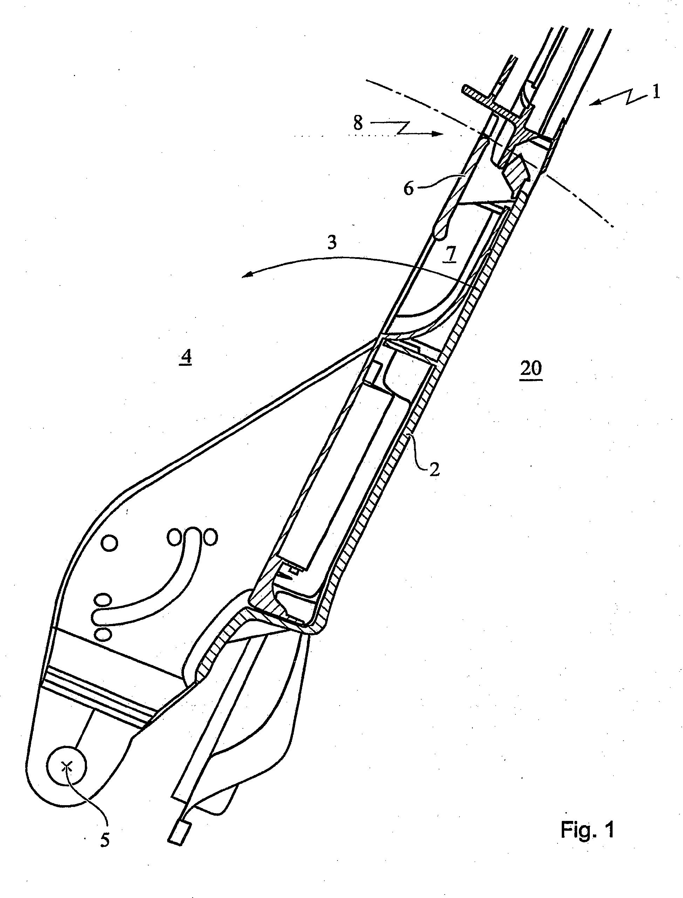

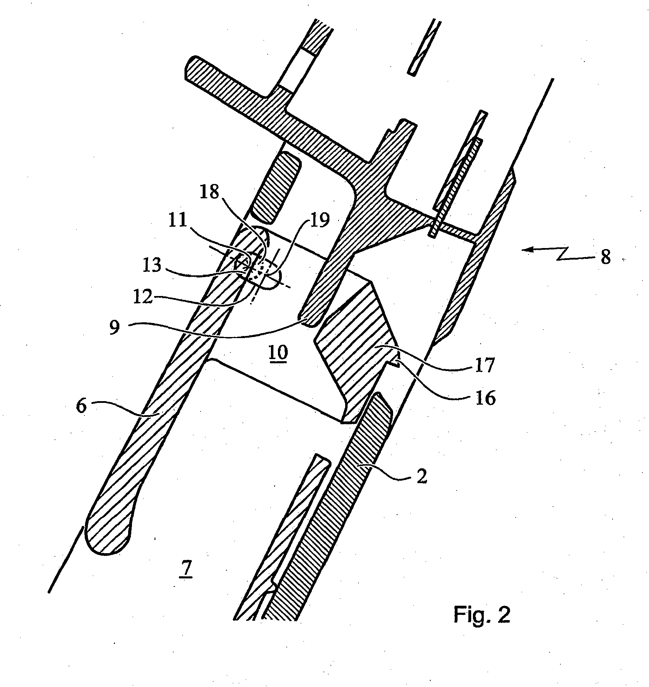

**Figur 1** zeigt einen vertikalen Querschnitt durch eine erfindungsgemäße Fahrzeugkomponente 1, hier durch eine Rückenlehne eines Sitzes. Daher wird im folgenden der Begriff Rückenlehne für die Fahrzeugkomponente 1 verwendet. Die Rückenlehne 1 trennt einen Fahrgastraum 4 von einem Laderaum 20 und weist ein schwenkbares Bauteil 2 auf, hier eine Durchladeklappe, beispielsweise für Skier. Im folgenden wird daher der Begriff Klappe für das schwenkbare Bauteil 2 verwendet. Die Klappe 2 ist im Betriebsfall von einer hier dargestellten und im wesentlichen vertikalen Ruheposition in eine im wesentlichen horizontale Durchladeposition um eine zweite Drehachse 5 in einer Öffnenrichtung reversibel klappbar, was durch den Pfeil 3 dargestellt ist. Die Durchladeklappe 2 ist mit der Rückenlehne 1 mittels einer Verriegelung 8 der Ruheposition reversibel verriegelbar. Die Ver- bzw. Entriegelung der Verriegelung 8 erfolgt mit dem Entriegelungshebel 6, der im Betriebsfall um eine erste Drehachse 11, die in **Figur 2** dargestellt ist, drehbar ist, wodurch die Klappe 2 in eine Entriegelungsposition entriegelbar ist. Betriebsfall im Sinne der Erläuterungen bedeutet die normale Nutzungssituation des Fahrzeugs im Gegensatz zu der Crashsituation. Zur leichteren Handhabung des Entriegelungshebels 6 weist die , Klappe eine Griffmulde 7 auf.

**Figur 2** zeigt die Verriegelung 8 der Durchladeklappe 2 aus **Figur 1** in einem vertikalen Querschnitt. Dargestellt ist die Klappe 2, die die Griffmulde 7 zur einfacheren Handhabung des Entriegelungshebels 6 aufweist. Der Entriegelungshebel 6 ist um eine erste Drehachse 11 drehbar. Die Darstellung zeigt die Verriegelung 8 im Betriebsfall in Verriegelungsposition. Die erste Drehachse 11 befindet sich in der Betriebsposition 18. Sichtbar ist ebenfalls eine Ausnehmung 12, hier ein Langloch, in dem sich im Crashfall in der hier dargestellten Ausführungsform die erste Drehachse 11 relativ zur Klappe 2 in eine Crashposition 19 verschiebt. Die erste Drehachse 11 wird hier durch einen Bolzen 13 gebildet. Bei Drehung des Entriegelungshebels 6 um die erste Drehachse 11 wird der Rasthaken 17, der in dieser Ausführungsform der Fahrzeugkomponente 1 einstückig mit dem Entriegelungshebel 6 ist, um die erste Drehachse 11 und um ein Schließstück 9 gedreht. Das Schließstück 9 ist in einer Aufnahme 10 für das Schließstück 9 angeordnet. Der Rasthaken 17 ist in der Verriegelungsposition zwischen dem Schließstück 9 und der Klappe 2 angeordnet und dreht sich bei Drehung um die erste Drehachse 11 um das Schließstück 9 herum, so dass die Klappe 2 entriegelt wird. Zur Sicherung im Crashfall weist der Rasthaken 17 ein Rastmittel 16 auf, hier eine Nase.

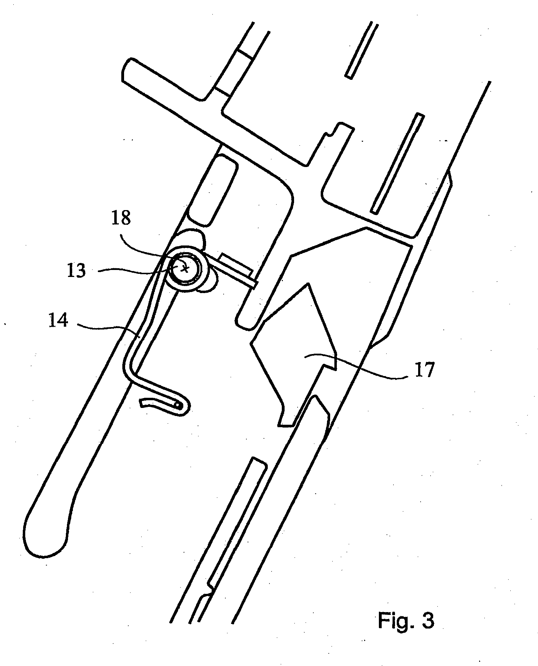

**Figur 3** zeigt die Verriegelung 8 aus **Figur 2** in Verriegelungsposition im Betriebsfall. Der Rasthaken 17 und/oder die erste Drehachse 11 bzw. der Bolzen 13, der in dieser Ausführungsform die erste Drehachse 11 bildet, werden durch ein Mittel 14, hier eine Feder, in der Betriebsposition 18 gehalten. Im folgenden wird der Begriff Feder für das Mittel 14 verwendet. Zusätzlich wird der Entriegelungshebel durch die Feder in der dargestellten Verriegelungsposition gehalten.

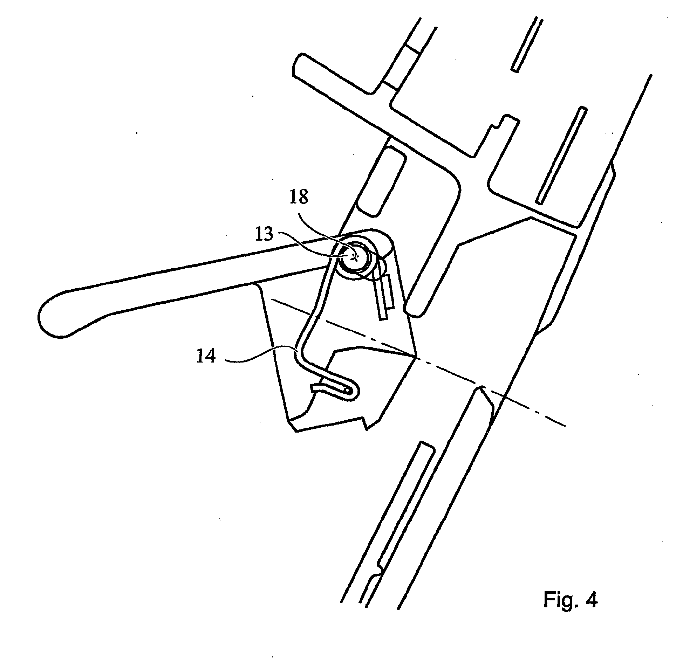

**Figur 4** zeigt die Verriegelung aus **Figur 2** in Entriegelungsposition im Betriebsfall. Durch Drehung des Entriegelungshebels 6 gegen die Federkraft der Feder 14 und dadurch des Rasthakens 17 um die erste Drehachse 11 bzw. den Bolzen 13 wird die Klappe 2 entriegelt, wobei der Bolzen 13 in der Betriebsposition 18 verbleibt. Dadurch, dass sich die Drehachse 11 in der linken Betriebsposition befindet kann die Rastnase an der Klappe 2 vorbeigedreht werden. Die Feder 14 wird beim Entriegeln gespannt und führt den Rasthaken 17 bevorzugt in die Verriegelungsposition zurück.

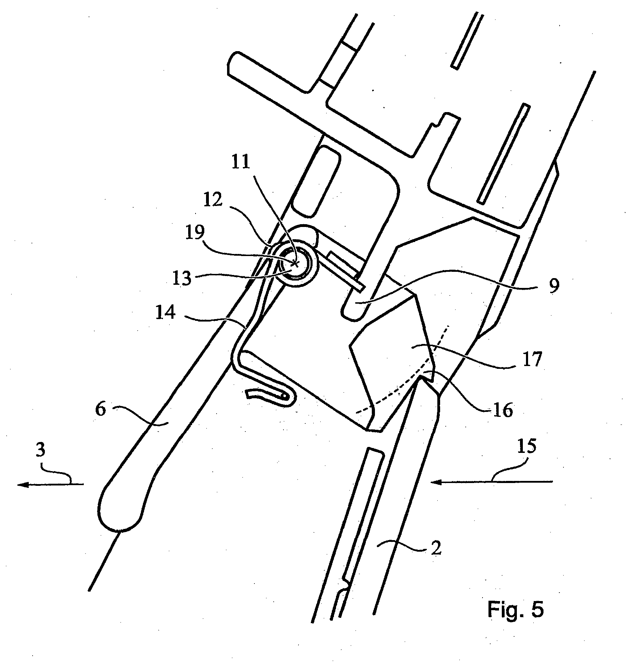

**Figur 5** zeigt die Verriegelung aus **Figur 2** in Verriegelungsposition im Crashfall. Durch eine Kraft 15 in Öffnungsrichtung 3 der Klappe 2 wird in dieser Ausführungsform die erste Drehachse 11 bzw. der Bolzen 13 in der Ausnehmung 12 relativ zur Klappe 2 in die Crashposition 19 nach rechts verschoben. Dadurch kann der Rasthaken nicht mehr an der Klappe 2 vorbei in die Entriegelungsposition drehen. Der Rasthaken 17 wirkt kraftschlüssig zwischen dem ortsfest angeordneten Schließstück 9 und der Klappe 2, und leitet die auftretenden Kräfte in die Struktur des Sitzes ein. Zusätzlich weist der Rasthaken 17 ein Rastmittel 16, hier eine Nase auf, das im Crashfall an der Klappe 2 zumindest teilweise anliegt und das Entriegeln des Rasthakens 17 verhindert.. Die Verschiebung der ersten Drehachse 11 erfolgt gegen die Kraft der Feder 14 und wird nach dem Crash aufgrund der Rückstellkraft der Feder 14 wieder in die Betriebsposition 18 überführt.

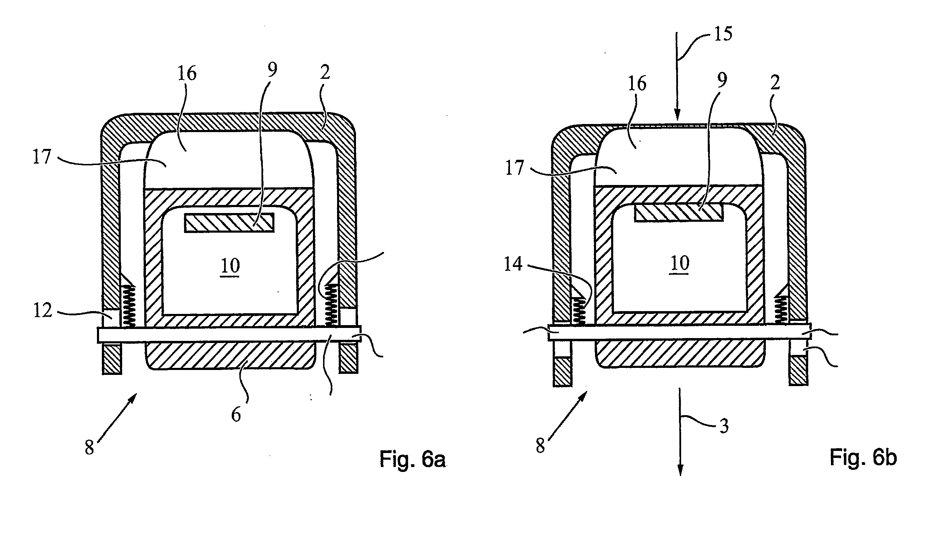

**Figur 6a** zeigt die Klappe 2 mit der Verriegelung 8 aus **Figur 2** in einem horizontalen Querschnitt in Verriegelungsposition im Betriebsfall. Der Entriegelungshebel 6 und der Rasthaken 17 mit dem Rastmittel 16 sind einstückig und um den Bolzen 13, der die erste Drehachse 11 bildet, drehbar. Der Bolzen 13 ist in zwei Ausnehmungen 12 der Klappe 2 in Betriebsposition 18 von zwei Federn 14 gehalten. Das Schließstück 9 ist in der Aufnahme 10 für das Schließstück 9 angeordnet, so dass der Rasthaken 17 zwischen dem Schließstück 9 und der Klappe 2 angeordnet und die Klappe 2 verriegelt ist.

**Figur 6b** zeigt die Klappe 2 mit der Verriegelung 8 aus **Figur 2** in einem horizontalen Querschnitt in Verriegelungsposition im Crashfall. Durch eine auf die Klappe 2 in Öffnenrichtung 3 der Klappe 2 wirkende Kraft 15 verschiebt sich der Bolzen 3 in den Ausnehmungen 12 gegen die Kraft der Federn 14 in die Crashposition 19. In dieser Position ist der Rasthaken 17 kraftschlüssig zwischen dem Schließmittel 9 und der Klappe 2 angeordnet und die Rastnase 16 verhindert das Entriegeln des Rasthakens 17.

Die Fahrzeugkomponente ist in einer Vielzahl von Fahrzeugtypen verwendbar, beispielsweise in Kraftfahrzeugen, Flugzeugen oder Schiffen. Sie ist beispielsweise ein Sitz eines Fahrzeugs oder eine Wand.

### Bezugszeichenliste:

- 1: Fahrzeugkomponente, beispielsweise Rückenlehne eines Sitzes
- 2: Schwenkbares Bauteil, beispielsweise Klappe oder Durchladeklappe
- 3: Öffnenrichtung des schwenkbaren Bauteils
- 4: Fahrzeuginnenraum
- 5: Zweite Drehachse
- 6: Entriegelungshebel
- 7: Griffmulde
- 8: Verriegelung
- 9: Schließstück
- 10: Aufnahme für das Schließstück
- 11: Erste Drehachse
- 12: Ausnehmung, beispielsweise Kulisse oder Langloch
- 13: Bolzen, der die erste Drehachse bildet
- 14: Feder
- 15: In Öffnenrichtung wirkende Kraft
- 16: Rastmittel, beispielsweise Nase
- 17: Rasthaken
- 18: Betriebsposition
- 19: Crashposition
- 20: Laderaum

## Patentansprüche

1. Fahrzeugkomponente (1) zur Trennung des Fahrgastraums und des Laderaums, die ein schwenkbares Bauteil (2) mit einer Verriegelung (8) umfasst, wobei die Verriegelung (8) einen Rasthaken (17) aufweist, der im Betriebsfall und bei verriegeltem Bauteil mit einem Schließstück (9) zusammenwirkt und im Betriebsfall um eine erste Drehachse (11) von einer Verriegelungsposition in eine Entriegelungsposition drehbar ist, wobei das entriegelte schwenkbare Bauteil (2) um eine zweite Drehachse (5) in einer Öffnenrichtung (3) von einer im wesentlichen vertikalen Ruheposition in eine im wesentlichen horizontale Durchladeposition (3) klappbar ist, so dass der Fahrgastraum zumindest teilweise als Laderaum nutzbar ist, **dadurch gekennzeichnet, dass** sich bei einem in der verriegelten Ruheposition befindlichen schwenkbaren Bauteil (2) durch eine in Öffnenrichtung (3) des schwenkbaren Bauteils (2) wirkende Kraft (15) die erste Drehachse (11) relativ zu dem schwenkbaren Bauteil (2), und/oder der Rasthaken (17) relativ zur ersten Drehachse (11), von einer Betriebsposition (18) in eine Crashposition (19) verschiebt, so dass der Rasthaken (17) vorzugsweise reversibel so mit dem schwenkbaren Bauteil (2) zusammenwirkt, dass es nicht entriegelbar ist.

2. Fahrzeugkomponente (1) nach Anspruch 1, **dadurch gekennzeichnet, dass** das schwenkbare Bauteil und/oder der Rasthaken (17) eine Ausnehmung (12), bevorzugt eine Kulisse, besonders bevorzugt ein Langloch, aufweist, mittels der die erste Drehachse (11) relativ zu dem schwenkbaren Bauteil (2) und/oder der Rasthaken (17) relativ zur ersten Drehachse (11) verschiebbar ist.

3. Fahrzeugkomponente (1) nach einem der vorherigen Ansprüche, **dadurch gekennzeichnet, dass** die Verriegelung (8) ein Schließstück (9) umfasst, welches ortsfest mit der Fahrzeugkomponente (1) verbunden ist, dass der Rasthaken (17) im Betriebsfall und in Ruheposition des schwenkbaren Bauteils (2) mit dem Schließstück (9) zusammenwirkt und dadurch ein Klappen des schwenkbaren Bauteils (2) verhindert und dass das schwenkbare Bauteil (2) durch Drehung des Rasthakens (17) um die erste Drehachse (11) und um das Schließstück (9) herum entriegelbar ist.

4. Fahrzeugkomponente (1) nach einem der vorherigen Ansprüche, **dadurch gekennzeichnet, dass** im Crashfall und in verriegelter Ruheposition des schwenkbaren Bauteils (2) der Rasthaken (17) kraftschlüssig zwischen dem Schließstück (9) und dem schwenkbaren Bauteil (2) wirkt und die in Öffnenrichtung (3) des schwenkbaren Bauteils (2) wirkende Kraft (15) auf das Schließstück (9) überträgt.

5. Fahrzeugkomponente (1) nach einem der vorherigen Ansprüche, **dadurch gekennzeichnet, dass** der Rasthaken (17) ein Rastmittel (16), bevorzugt eine Nase, aufweist, das mit dem schwenkbaren Bauteil (2) zusammenwirkt und im Crashfall und in verriegelter Ruheposition des schwenkbaren Bauteils (2) das Entriegeln des Rasthakens (17) verhindert.

6. Fahrzeugkomponente (1) nach einem der vorherigen Ansprüche, **dadurch gekennzeichnet, dass** die Verriegelung (8) einen Entriegelungshebel (6) aufweist, der im Betriebsfall um die erste Drehachse (11) drehbar ist und durch dessen Drehung der Rasthaken (17) von der Verriegelungsposition in die Entriegelungsposition drehbar ist.

7. Fahrzeugkomponente (1) nach einem der vorherigen Ansprüche, **dadurch gekennzeichnet, dass** die Verriegelung (8) ein Mittel (14), bevorzugt eine Feder, umfasst, das die erste Drehachse (11) und/oder den Rasthaken (17) in der Betriebsposition (18) hält und vorzugsweise nach dem Crash wieder in die Betriebsposition (18) überführt.

8. Fahrzeugkomponente (1) nach einem der vorherigen Ansprüche, **dadurch gekennzeichnet, dass** sich im Crashfall die erste Drehachse (11) relativ zu dem schwenkbaren Bauteil (2) und/oder der Rasthaken (17) relativ zur ersten Drehachse (11) gegen die Kraft des Mittels (14) verschiebt.

9. Fahrzeugkomponente (1) nach einem der voranstehenden Ansprüche, **dadurch gekennzeichnet, dass** das Mittel (14) den Entriegelungshebel (6) in der Verriegelungsposition hält.

10. Fahrzeugkomponente (1) nach einem der vorherigen Ansprüche, **dadurch gekennzeichnet, dass** zumindest der Entriegelungshebel (6) und der Rasthaken (17) der Verriegelung (8) einstückig sind.

11. Verfahren zur Sicherung eines schwenkbaren Bauteils (2) einer Fahrzeugkomponente (1) gemäß Anspruch 1 gegen Öffnen im Crashfall, mittels einer Verriegelung (8), die einen Rasthaken (17) aufweist, der im Betriebsfall um eine erste Drehachse (11) von einer Verriegelungsposition in eine Entriegelungsposition drehbar ist, verriegelbar ist, wobei das entriegelte schwenkbare Bauteil (2) um eine zweite Drehachse (5) in einer Öffnenrichtung (3) von einer im wesentlichen vertikalen Ruheposition in eine im wesentlichen horizontale Durchladeposition (3) klappbar ist, **dadurch gekennzeichnet, dass** die erste Drehachse (11) im Crashfall in verriegelter Ruheposition des schwenkbaren Bauteils (2) durch eine in Öffnenrichtung (3) des schwenkbaren Bauteils (2) wirkende Kraft vorzugsweise reversibel so verschoben wird, dass das schwenkbare Bauteil (2) nicht entriegelt werden kann, indem der Rasthaken (17) relativ zur ersten Drehachse (11), von einer Betriebsposition (18) in eine Crashposition (19) verschoben wird, so dass der Rasthaken (17) vorzugsweise reversibel so mit dem schwenkbaren Bauteil (2) zusammenwirkt, dass es nicht entriegelbar ist.

## Claims

1. Vehicle component (1) for separating the passenger compartment and the luggage compartment which comprises a pivotable component (2) with a lock (8), the lock (8) comprising a detent hook (17) which, when operational, and when the component is locked, cooperates with a locking part (9) and, when operational, may be rotated about a first rotational axis (11) from a locked position into an unlocked position, the unlocked pivotable component (2) being able to be folded about a second rotational axis (5) in an opening direction (3) from a substantially vertical resting position into a substantially horizontal loading position (3), so that the passenger compartment may be used at least partially as a luggage compartment, **characterized in that** the first rotational axis (11) is displaced in relation to the pivotable component (2) and/or the detent hook (17) is displaced in relation to the first rotational axis (11) from an operating position (18) into a crash position (19), when the pivotable component (2) is in the locked resting position and by means of a force (15) acting in the opening direction (3) of the pivotable component (2), so that the detent hook (17) preferably cooperates in a reversible manner with the pivotable component (2) such that said component may not be unlocked.

2. Vehicle component (1) according to Claim 1, **characterized in that** the pivotable component and/or the detent hook (17) comprise a recess (12), preferably a slot, particularly preferably an elongated hole, by means of which the first rotational axis (11) may be displaced in relation to the pivotable component (2) and/or the detent hook (17) may be displaced in relation to the first rotational axis (11).

3. Vehicle component (1) according to one of the preceding claims, **characterized in that** the lock (8) comprises a locking part (9) which is fixedly connected to the vehicle component (1), **in that** the detent hook (17), when operational and in the resting position of the pivotable component (2), cooperates with the locking part (9) and, as a result, prevents folding of the pivotable component (2) and **in that** the pivotable component (2) may be unlocked by rotating the detent hook (17) about the first rotational axis (11) and about the locking part (9).

4. Vehicle component (1) according to one of the preceding claims, **characterized in that**, in the event of a crash and in the locked resting position of the pivotable component (2), the detent hook (17) acts non-positively between the locking part (9) and the pivotable component (2) and transmits the force (15) acting in the opening direction (3) of the pivotable component (2) onto the locking part (9).

5. Vehicle component (1) according to one of the preceding claims, **characterized in that** the detent hook (17) comprises a detent means (16), preferably a nose, which cooperates with the pivotable component (2) and, in the event of a crash and in the locked resting position of the pivotable component (2), prevents the unlocking of the detent hook (17).

6. Vehicle component (1) according to one of the preceding claims, **characterized in that** the lock (8) comprises an unlocking lever (6) which, when operational, may be rotated about the first rotational axis (11) and by the rotation of which the detent hook (17) may be rotated from the locked position into the unlocked position.

7. Vehicle component (1) according to one of the preceding claims, **characterized in that** the lock (8) comprises a means (14), preferably a spring, which holds the first rotational axis (11) and/or the detent hook (17) in the operating position (18) and preferably, after the crash, transfers the first rotational axis and/or the detent hook into the operating position (18) again.

8. Vehicle component (1) according to one of the preceding claims, **characterized in that**, in the event of a crash, the first rotational axis (11) is displaced in relation to the pivotable component (2) and/or the detent hook (17) is displaced in relation to the first rotational axis (11) against the force of the means (14).

9. Vehicle component (1) according to one of the preceding claims, **characterized in that** the means (14) holds the unlocking lever (6) in the locked position.

10. Vehicle component (1) according to one of the preceding claims, **characterized in that** at least the unlocking lever (6) and the detent hook (17) of the lock (8) are in one piece.

11. Method for securing a pivotable component (2) of a vehicle component (1) according to Claim 1 against opening in the event of a crash, may be locked by means of a lock (8) which comprises a detent hook (17) which may be rotated when operational about a first rotational axis (11) from a locked position into an unlocked position, the unlocked pivotable component (2) being able to be folded about a second rotational axis (5) in an opening direction (3) from a substantially vertical resting position into a substantially horizontal loading position (3), **characterized in that**, in the event of a crash, the first rotational axis (11) in the locked resting position of the pivotable component (2) is displaced in a reversible manner by a force acting in the opening direction (3) of the pivotable component (2), preferably such that the pivotable component (2) may not be unlocked, by the detent hook (17) being displaced in relation to the first rotational axis (11) from an operating position (18) into a crash position (19), so that the detent hook (17) preferably cooperates in a reversible manner with the pivotable component (2) such that said component may not be unlocked.

## Revendications

1. Composant de véhicule (1) pour la séparation de l'habitacle de conduite et de l'espace de chargement, qui comprend un composant pivotant (2) avec un verrouillage (8), le verrouillage (8) présentant un crochet d'encliquetage (17) qui, pendant le fonctionnement et lorsque le composant est verrouillé, coopère avec une pièce de fermeture (9) et, pendant le fonctionnement, peut tourner autour d'un premier axe de rotation (11) d'une position de verrouillage dans une position de déverrouillage, le composant pivotant déverrouillé (2) pouvant être rabattu autour d'un deuxième axe de rotation (5) dans une direction d'ouverture (3) depuis une position de repos essentiellement verticale dans une position de chargement essentiellement horizontale (3) de sorte que l'habitacle de conduite puisse être utilisé au moins en partie en tant qu'espace de chargement, **caractérisé en ce que** lorsqu'un composant pivotant (2) se trouve dans la position de repos verrouillée, le premier axe de rotation (11) se déplace par rapport au composant pivotant (2), et/ou le crochet d'encliquetage (17) se déplace par rapport au premier axe de rotation (11), par le biais d'une force (15) agissant dans la direction d'ouverture (3) du composant pivotant (2), depuis une position de fonctionnement (18) dans une position de collision (19) de sorte que le crochet d'encliquetage (17) coopère de préférence de manière réversible avec le composant pivotant (2) de telle sorte qu'il ne puisse pas être déverrouillé.

2. Composant de véhicule (1) selon la revendication 1, **caractérisé en ce que** le composant pivotant et/ou le crochet d'encliquetage (17) présente(nt) un évidement (12), de préférence une coulisse, particulièrement préférablement un trou oblong, au moyen duquel le premier axe de rotation (11) peut être déplacé par rapport au composant pivotant (2) et/ou le crochet d'encliquetage (17) peut être déplacé par rapport au premier axe de rotation (11).

3. Composant de véhicule (1) selon l'une quelconque des revendications précédentes, **caractérisé en ce que** le verrouillage (8) comprend une pièce de fermeture (9) qui est connectée fixement au composant de véhicule (1), **en ce que** le crochet d'encliquetage (17), pendant le fonctionnement et dans la position de repos du composant pivotant (2), coopère avec la pièce de fermeture (9) et empêche de ce fait un rabattement du composant pivotant (2) et **en ce que** le composant pivotant (2) peut être déverrouillé par rotation du crochet d'encliquetage (17) autour du premier axe de rotation (11) et autour de la pièce de fermeture (9).

4. Composant de véhicule (1) selon l'une quelconque des revendications précédentes, **caractérisé en ce qu'**en cas de collision et dans la position de repos verrouillée du composant pivotant (2), le crochet d'encliquetage (17) agit par engagement par force entre la pièce de fermeture (9) et le composant pivotant (2) et transfère la force (15) agissant dans la direction d'ouverture (3) depuis le composant pivotant (2) à la pièce de fermeture (9).

5. Composant de véhicule (1) selon l'une quelconque des revendications précédentes, **caractérisé en ce que** le crochet d'encliquetage (17) présente un moyen d'encliquetage (16), de préférence un nez, qui coopère avec le composant pivotant (2) et qui, en cas de collision et dans la position de repos verrouillée du composant pivotant (2), empêche le déverrouillage du crochet d'encliquetage (17).

6. Composant de véhicule (1) selon l'une quelconque des revendications précédentes, **caractérisé en ce que** le verrouillage (8) présente un levier de déverrouillage (6) qui, pendant le fonctionnement, peut tourner autour du premier axe de rotation (11) et par la rotation duquel le crochet d'encliquetage (17) peut tourner de la position de verrouillage dans la position de déverrouillage.

7. Composant de véhicule (1) selon l'une quelconque des revendications précédentes, **caractérisé en ce que** le verrouillage (8) présente un moyen (14), de préférence un ressort, qui maintient le premier axe de rotation (11) et/ou le crochet d'encliquetage (17) dans la position de fonctionnement (18) et, de préférence après la collision, le(s) ramène dans la position de fonctionnement (18).

8. Composant de véhicule (1) selon l'une quelconque des revendications précédentes, **caractérisé en ce qu'**en cas de collision, le premier axe de rotation (11) se déplace par rapport au composant pivotant (2) et/ou le crochet d'encliquetage (17) se déplace par rapport au premier axe de rotation (11) à l'encontre de la force du moyen (14).

9. Composant de véhicule (1) selon l'une quelconque des revendications précédentes, **caractérisé en ce que** le moyen (14) retient le levier de déverrouillage (6) dans la position de verrouillage.

10. Composant de véhicule (1) selon l'une quelconque des revendications précédentes, **caractérisé en ce qu'**au moins le levier de déverrouillage (6) et le crochet d'encliquetage (17) du verrouillage (8) sont réalisés d'une seule pièce.

11. Procédé pour la fixation d'un composant pivotant (2) d'un composant de véhicule (1) selon la revendication 1 pour empêcher son ouverture en cas de collision, verrouillable au moyen d'un verrouillage (8) qui présente un crochet d'encliquetage (17) qui, pendant le fonctionnement, peut tourner autour d'un premier axe de rotation (11) d'une position de verrouillage dans une position de déverrouillage, le composant pivotant déverrouillé (2) pouvant être rabattu autour d'un deuxième axe de rotation (5) dans une direction d'ouverture (3) depuis une position de repos essentiellement verticale dans une position de chargement essentiellement horizontale (3), **caractérisé en ce que** le premier axe de rotation (11), en cas de collision, dans la position de repos verrouillée du composant pivotant (2), peut être déplacé par une force agissant dans la direction d'ouverture (3) du composant pivotant (2) de préférence de manière réversible de telle sorte que le composant pivotant (2) ne puisse pas être déverrouillé, par le fait que le crochet d'encliquetage (17) est déplacé par rapport au premier axe de rotation (11) d'une position de fonctionnement (18) dans une position de collision (19) de sorte que le crochet d'encliquetage (17) coopère de préférence de manière réversible avec le composant pivotant (2) de manière à ce qu'il ne puisse pas être déverrouillé.
